# EUROPEAN PATENT APPLICATION

(11) **EP 4 152 449 A1**
(43) Date of publication of application: **22.03.2023**
(21) Application number: 21198146.9
(22) Date of filing: 21.09.2021
(51) Int. Cl.: H01M 8/04007, B60H 1/00, B60L 50/75, B60L 58/26, B60L 58/33, F01P 7/16, H01M 8/04029, H01M 8/04089, H01M 8/04119, H01M 8/04082, H01M 8/04298, H01M 8/04492, H01M 8/04992, H01M 10/625, H01M 8/10

(54) **SYSTEMS AND METHODS FOR CONTROLLING A COOLING SYSTEM OF A VEHICLE**

(71) Applicant: Ford Global Technologies, LLC, Dearborn, MI 48126 (US)
(72) Inventor: TUFAIL, Khizer, London, IG6 2TH (GB); GIROLDO, Mauro, Brentwood, CM14 4GU (GB); MEHRING, Jan, 50668 Koeln (DE); BANCROFT, Kit, Milton Keynes, MK15 9LD (GB); EGAN, Martin, Maidstone, ME15 6AJ (GB); QUIX, Hans Guenter, 52134 Herzogenrath (DE)
(74) Representative: Haley Guiliano International LLP

(57) **Abstract**

Methods and system are provided for a cooling system for a vehicle having a fuel cell system. The cooling system comprises a first cooling circuit configured to cool a first set of vehicle components and a second cooling circuit configured to cool a second set of vehicle components. The fuel cell system is distributed between the first set of vehicle components and the second set of vehicle components.

## Description

### FIELD

The present disclosure relates to systems and methods for controlling a cooling system for a vehicle having a fuel cell system, more particularly, but not exclusively, to systems and methods for selectively operating a controller of a fuel cell to improve the cooling of the fuel cell and other components of the vehicle.

### BACKGROUND

Hydrogen, as a fuel source, can be used in both combustion and fuel cell (FC) applications. Using hydrogen in FCs to generate power using a chemical reaction rather than combustion produces only water and heat as byproducts. In addition, FC technology is a comprehensive and promising technology for the generation of clean energy owing to low emissions and high efficiency.

FCs can be used in a wide range of applications, including transportation, material handling and stationary, portable, and emergency backup power, and the like. In operation, the output of a fuel cell is absorbed and conditioned by a load, which may be a motor or a battery, for example.

FCs may be grouped based on the kind of electrolytes they comprise. In general, proton exchange membrane fuel cells (PEMFCs) are used in the transportation sector, owing to their low working temperature, high efficiency, quick start-up and response to load changes, compact size, low weight, long life, and high current/power density.

One exemplary use of a PEMFC is in a fuel cell electric vehicle (FCEV) with hydrogen as the fuel source. When a fuel cell system is installed in an FCEV, it interfaces with several systems of the vehicle, such as the power train, battery system, steering circuit, cooling system, and an onboard HVAC system. The power train includes the drive motor, transmission and ancillary components. The steering circuit uses pressurized hydraulic oil to operate the steering mechanism. The cooling system removes heat from the standard vehicle and fuel cell components and supplies heat to the HVAC system, and rejects waste heat to the environment. In addition, the HVAC system may also provide coach heat and air conditioning. In some examples, FCs may be sensitive to particulates and contaminants, in particular metallic particulates and contaminants in the cooling loop. Accordingly, the thermal and water management of PEMFCs are the most challenging issues in their implementation in vehicles.

### SUMMARY OF INVENTION

According to a first example of the disclosure, there is provided a cooling system for a vehicle having a fuel cell system. The cooling system comprises a first cooling circuit configured to cool a first set of vehicle components, a second cooling circuit configured to cool a second set of vehicle components, wherein the fuel cell system is distributed between the first set of vehicle components and the second set of vehicle components. For example, the one of the first and second cooling circuits may be configured to cool at least one component of the fuel cell system, e.g., in combination with one or more other vehicle components, such as one or more components of the HVAC system, and the other of the first and second cooling circuits may be configured to cool at least one other component of the fuel cell system, e.g., in combination with one or more other vehicle components, such as the battery system. In some examples, the first cooling circuit may be configured to cool at least a portion of the fuel cell system and, optionally, at least a portion of at least one other vehicle system in addition. In some examples, the second cooling circuit may be configured to cool at least a portion of the fuel cell system, and at least a portion of a power electronics circuit. In some examples, the first set of vehicle components may comprise, e.g., only comprise components of the fuel cell system.

In some examples, the cooling system further comprises a heat exchanger assembly coupled to the first cooling circuit and the second cooling circuit. The heat exchanger assembly may comprise a plurality of heat exchangers, e.g., radiators and/or condensers.

In some examples, the first cooling circuit is coupled to a high-temperature heat exchanger of the heat exchanger assembly, and the second cooling circuit is coupled to a low-temperature heat exchanger of the heat exchanger assembly.

In some examples, the cooling system further comprises a third cooling circuit configured to cool a third set of vehicle components, wherein the third cooling circuit is coupled to the heat exchanger assembly.

In some examples, the third cooling circuit is coupled to a condenser of the heat exchanger assembly.

In some examples, the cooling system further comprises a control module configured to control coolant flow through the first cooling circuit and the second cooling circuit, e.g., based on one or more operational parameters and/or requirements of at least one of the first cooling circuit and the second cooling circuit.

In some examples, the second cooling circuit comprises a first pump configured to flow coolant through a first cooling loop of the second cooling circuit, and a second pump configured to flow coolant through a second cooling loop of the second cooling circuit.

In some examples, the fuel cell system is cooled using the first cooling circuit and the first cooling loop of the second cooling circuit.

According to a second example of the disclosure, there is provided a vehicle comprising the cooling system as described in the first example.

According to a third example in accordance with an aspect of the disclosure, there is provided a cooling system control method for a vehicle having a fuel cell system. The method comprising cooling a first set of vehicle components using a first cooling circuit and cooling a second set of vehicle components using a second cooling circuit, wherein the fuel cell system is distributed between the first set of vehicle components and the second set of vehicle components.

According to a fourth example in accordance with an aspect of the disclosure, there is provided a non-transitory computer-readable medium having instructions encoded thereon for carrying out a method of cooling a fuel cell system of a vehicle, that, when executed by control circuitry, cause the control circuitry to control a first cooling circuit to cool a first set of vehicle components; and control a second cooling circuit configured to cool a second set of vehicle components, wherein the fuel cell system is distributed between the first set of vehicle components and the second set of vehicle components.

According to a fifth example in accordance with an aspect of the disclosure, there is provided a cooling system for a vehicle having a fuel cell system. The cooling system comprises a first cooling circuit configured to cool at least one component of the fuel cell system, and a second cooling circuit configured to cool at least one other component of the fuel cell system.

For the avoidance of doubt, the system and methods for controlling a cooling system for a vehicle having a fuel cell system, according to any of the examples described herein, may be considered to apply equally to any FC system. Any specific references to one or more FC stacks should be considered to be examples and are not intended to be limiting.

Whilst the benefits of the systems and method may be described by reference to fuel cell electric vehicles, it is understood that the benefits of the present disclosure are not limited to such types of vehicle, and may also apply to other types of vehicles, such as forklifts, trucks, buses, locomotives, motorcycles, aircraft and watercraft, and/or non-vehicle based systems that utilize a fuel cell, such as electrical generators.

These examples and other aspects of the disclosure will be apparent and elucidated with reference to the example(s) described hereinafter. It should also be appreciated that particular combinations of the various examples and features described above and below are often illustrative and any other possible combination of such examples and features are also intended, notwithstanding those combinations that are clearly intended as mutually exclusive.

### BRIEF DESCRIPTION OF THE DRAWINGS

The above and other objects and advantages of the disclosures herein will be apparent upon consideration of the following detailed description, taken in conjunction with the accompanying drawings, in which:
FIG. 1 illustrates a block diagram of a cooling system, in accordance with at least one of the examples described herein.
FIG. 2 illustrates a fuel cell coolant circuit, in accordance with at least one of the examples described herein.
FIG. 3 illustrates a power electronics coolant circuit, in accordance with at least one of the examples described herein.
FIG 4 illustrates a battery coolant circuit, in accordance with at least one of the examples described herein.
FIG. 5 is a flowchart of a cooling system control method, in accordance with at least one of the examples described herein.
FIG. 6 illustrates a vehicle comprising a fuel cell, a motor, and an exemplary cooling system, in accordance with at least one of the examples described herein.
FIG. 7 depicts an exemplary control circuitry, in accordance with at least one of the examples described herein.

### DETAILED DESCRIPTION

It should be understood that the detailed description and specific examples herein while indicating exemplary embodiments, are intended for purposes of illustration only and are not intended to limit the scope of the disclosure. These and other features, aspects, and advantages of the present disclosure will become better understood from the following description, appended claims, and accompanying drawings. It should be understood that the Figures are merely schematic and are not drawn to scale. It should also be understood that the same or similar reference numerals are used throughout the Figures to indicate the same or similar parts.

As discussed briefly above, the benefits of PEMFCs include low working temperature, high efficiency, quick start-up and response to load changes, compact size, low weight, long life, and high current/power density. Hence, PEMFCs are an ideal candidate as an alternative power source for automotive applications in the future.

An FC typically consists of three components, namely, the cathode (negative electrode), the anode (positive electrode), and the electrode between the anode and cathode. The fuel and oxidant are continuously supplied to the anode and cathode sides, respectively. The electrodes are produced from porous materials, so the fuel and oxidant, which are fed separately at different sides of the cell, can permeate to the position close to the electrolyte. The electrochemical reactions occur in the existence of a catalyst, which accelerates it to produce an electric current (load) that flows through the load.

The heat generated as a byproduct of the electrochemical reactions must be taken away from the fuel cell system (FCS) to maintain the desired temperature inside the fuel cells. Different heat management schemes can be applied, including edge cooling, cooling with separate airflow, air cooling, cooling using the cathode air supply, phase change cooling, and liquid cooling. These cooling techniques are related to special conditions and factors and have their own advantages, limitations, and challenges.

The basic operational principle of a hydrogen PEMFC is that hydrogen flows through the anode feeding channels and spreads through the diffusion layer, reaching the catalytic layer where it is oxidized into electrons and protons.

The released electrons are led through the catalytic metal and the granulated coal of the anode catalytic layer and finally reaches the cathode. The protons are imparted through the membrane to the cathode catalytic layer. Oxygen is then injected into the feeding channels of the cathode and spread through the diffusion layer toward the catalytic layer, where it reacts with protons and electrons to generate water. The reaction on the cathode is exothermic, and the heat release is dependent on voltage, which is directly related to PEMFC efficiency.

Heat generation in FCs occurs due to (1) reversible heat of electrochemical reactions (also called entropic heat), (2) irreversibility of reactions, (3) ohmic resistance, and (4) heat from water vapor condensation. However, the FC stacks are very sensitive to particulates and contaminants, in particular metallic particulates and contaminants in the cooling loop. Accordingly, the thermal and water management of PEMFCs may present issues in their implementation in vehicles.

In addition to removing the heat generated by the PEMFC, the optimum operating temperature and temperature uniformity are ideally guaranteed inside the stack. As such, the fundamental purpose of cooling systems is to maintain a uniform temperature for protecting the PEM and ensuring long durability of the FC.

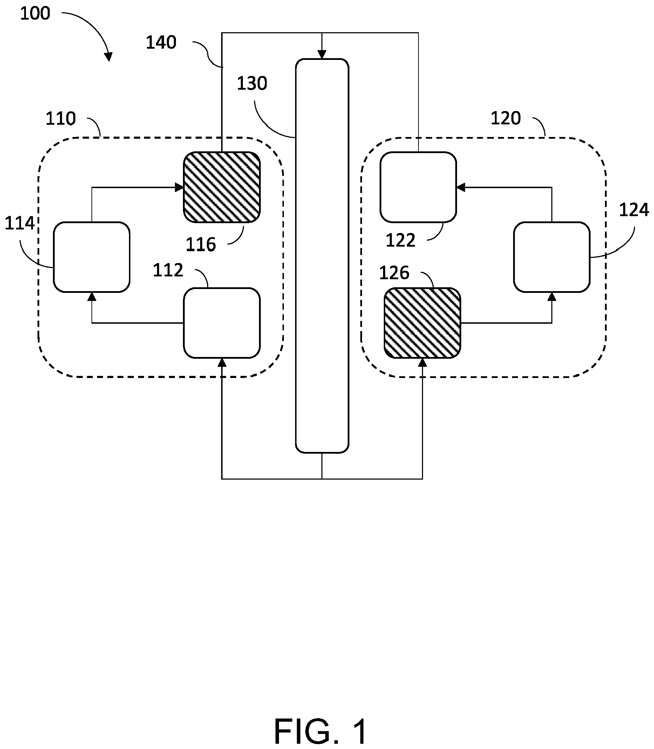

FIG. 1 illustrates a block diagram of a cooling system 100, in accordance with at least one of the examples described herein. The cooling system 100 comprises a first set of components 110, a second set of components 120, and a heat exchanger assembly 130. The first set of components 110, the second set of components 120 and the heat exchanger assembly 130 are connect by cooling lines 140. The cooling system 100 is adapted to carry excess thermal energy away from a fuel cell of a FCEV and one or more other vehicle components.

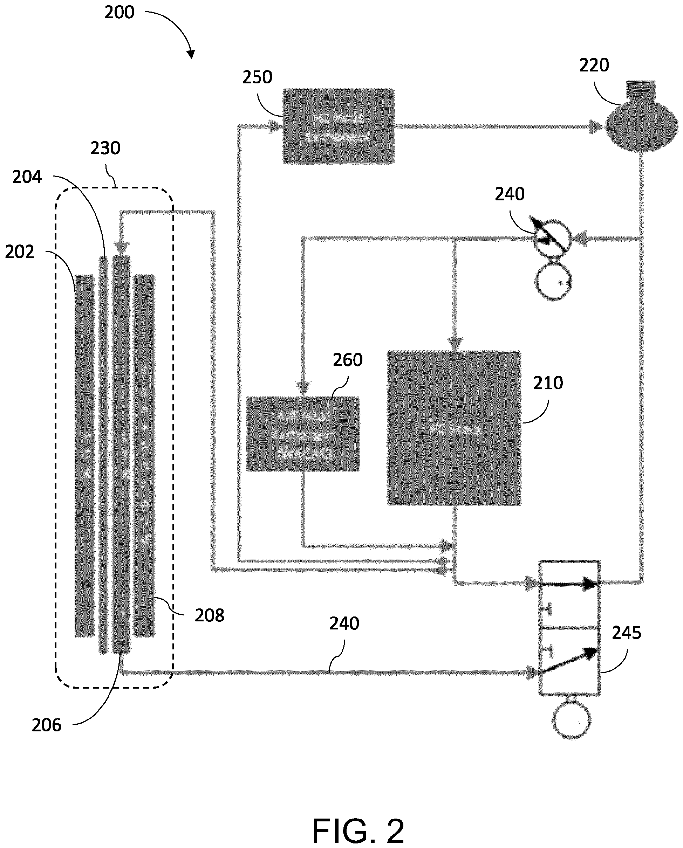

The first set of components 110 comprises a plurality of components 112-116. Component 116 is shown to be different to components 112 and 114 (e.g., by hashed lines) to illustrate that component 116 is part of a fuel cell 210 of FIG. 2. Components 112 and 114 may be part of one or more other different systems, for example a power electronics system and/or an HVAC. It is understood that, in some examples, the first set of components 110 may comprise, e.g., exclusively, components of a fuel cell system.

The second set of components 120 comprises a plurality of components 122-126. Component 126 is also shown to be different to components 122 and 124 (e.g., by hashed lines) to illustrate that component 116 is part of the fuel cell 210 of FIG. 2. Components 122 and 124 may be part of one or more other different systems, for example a power electronics system and/or an HVAC system.

Cooling lines 140 may be configured to carry any suitable fluid for transferring thermal energy. For example, the fluid may a gas or a liquid. In some examples, the liquid is one of, water, deionized water, a water/ethylene glycol mix, a water/propylene glycol mix, polyalkylene glycol or any other suitable coolant. The fluid may further comprise anti-freezing properties, and corrosion protection properties.

Cooling methods depend on several factors, such as FC power (e.g., FC size), system complexity, application, cost, and amount of heat recovered. For example, in small power generator applications, air cooling is prioritized due to its simplicity and lack of coolant loop and heat exchanger in contrast to liquid cooling. For FC stationary applications and large vehicles, liquid cooling is preferred because it does not have limitations in terms of size, weight, and complexity of the system. Moreover, liquid cooling has a high heat removal rate because of the high thermal conductivity and heat capacity. Cooling by cathode airflow is preferred in applications of FCs to portable and electronic power devices because of its simplicity. Meanwhile, compared with liquid cooling, cooling by coolant phase change exhibits the following advantages, e.g., lower coolant flow rate, simplified system layout, and eliminated coolant pumps. Any appropriate cooling methodology and fluid as described above is considered within the scope of the present disclosure and further applicable to the methodologies described here.

Fuel cell cooling is suggested according to power output. FC stacks with power less than 100 W can be cooled by reactant air, while FC systems of 200-2000 W can be cooled by separated air channels along with reactant streams. Hence, all forms of air-cooling are suitable for FCs with power up to 2 kW. Liquid cooling is usually essential for FC systems with a power of more than 10 kW. Generally, the heat transfer coefficient of the liquid is larger than that of the air or gases for the same pumping power because of the higher thermal conductivity and heat capacity of the former. Therefore, liquid cooling is currently widely used to take away the heat generated in high-power PEMFC stacks (> 10 kW), especially in automotive applications.

Referring back to FIG. 1, the heat transfer mechanism implemented involves the transfer of heat from fuel cell components 116 and 126. Importantly, fuel cell components 116 and 126 are each connected to a cooling circuit comprising components 112-114 and 122-124 that are not part of a fuel cell system. In other words, the fuel cell system components 116 and 126 each belong to a different cooling circuit. In this way, components of the FC system that may be most likely to cause contamination to the FC cooling circuit, such as an e-compressor or an HV DC/DC convertor, and potentially damage other more sensitive components of the FC system, can be isolated from other components of the FC system connected to FC cooling circuit. Therefore particulates and contaminants, in particular metallic particulates and contaminants, are eliminated or reduced in the FC system cooling circuit.

FIG. 2 illustrates a fuel cell coolant circuit 200, in accordance with at least one of the examples described herein. The FC coolant loop 200 comprises the FC stack 210, a coolant reservoir 220, a heat exchanger assembly 230, pumps 240 and 245, hydrogen heat exchanger 250, and AIR heat exchanger 260.

As shown in FIG. 2, the heat exchanger assembly 230 (which is similar to the heat exchanger assembly 130 of FIG. 1) comprises a high-temperature radiator 202, a condenser 204, a low-temperature radiator 206, and fan assembly 208. The components of fuel cell coolant loop 200 are connected by cooling lines 240 to low-temperature radiator 206.

FIG. 2 shows the exemplary components that are more sensitive to particulates and contaminants, in particular metallic particulates and contaminants, in the FC coolant circuit 200. These exemplary components may be more sensitive due to the constrictive flow of the components, narrow openings all moving mechanical parts such as pumps 240 and 245. Pump 240 may be a variable flow rate pump, as shown, and pump 245 may be a two-way pump, as shown, however, other pump configurations are considered to be within the scope of the present disclosure.

The main coolant loop for the FC stack 210 circulates the stack coolant through the fuel cell stack 210 where it absorbs heat and maintains the fuel cells at their optimum operating temperature. As the coolant leaves the stacks, it flows through the other components in the fuel cell coolant circuit 200. For example, As the coolant leaves the FC stack 210, it may flow through the air and hydrogen humidifiers where it supplies the heat required to vaporize the humidification water. The coolant can then enter the heat exchanger assembly 230 to dump the excess heat.

As with the humidification water, the fuel cell coolant must be non-conductive in order to prevent internal short circuits as it passes through the fuel cells in the fuel cell stack 210. The stack coolant can therefore be de-ionized water, or a mixture of de-ionized water and glycol, or the like. In some examples, the fuel cell coolant circuit 200 comprises a bypass filtration loop that includes one or more filters (not shown) such as a de-ionizing filter or a particular / contaminate filter.

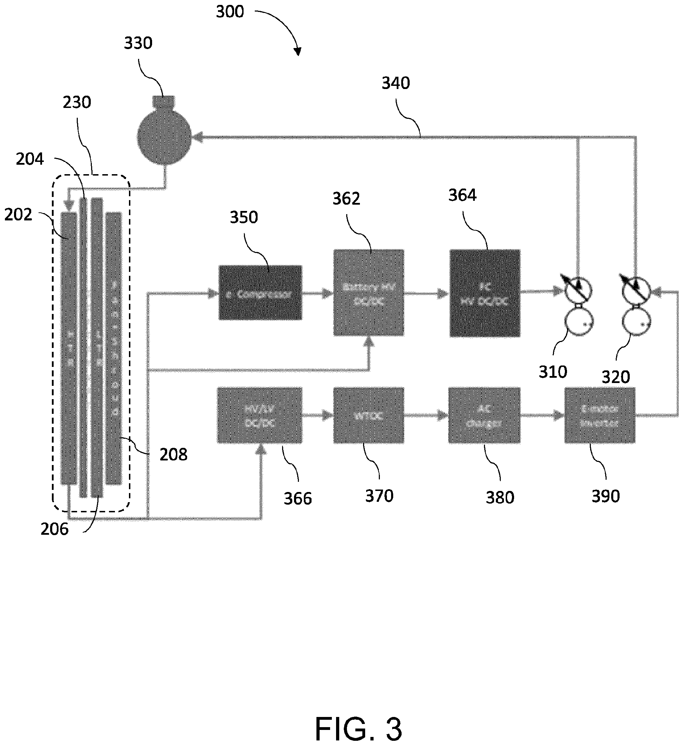

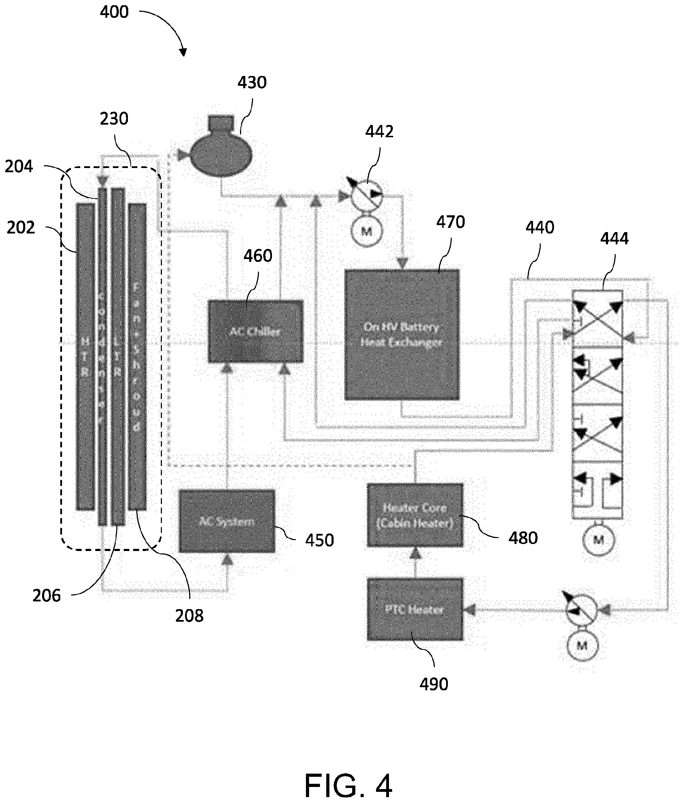

In some examples, reservoir 220 is isolated from the reservoirs of power electronics coolant circuit 300 and battery coolant circuit 400 of FIGS. 3 and 4. However, in some cases, the reservoirs 330 and 430 of FIGS. 3 and 4 are the same reservoir 220 of FIG. 2. In the examples wherein reservoir 220 is shared across all cooling circuits, the liquid is non-conductive as described above when a particular circuit comprises a component from the FC system.

FIG. 3 illustrates a power electronics coolant circuit 300, in accordance with at least one of the examples described herein. The power electronics coolant circuit 300, as shown in FIG. 3, may be thought of as the first set of components 110 of FIG. 1. The power electronics coolant circuit 300 comprises pumps 310 and 320, a coolant reservoir 330, the heat exchanger assembly 230 shown in FIG. 2 (comprising a high-temperature radiator 202, a condenser 204, a low-temperature radiator 206, and a fan assembly 208), and a series of power electronics components of a vehicle (not shown). Power electronics components of the vehicle comprise a high voltage (HV) DC to DC inverter 362, an HV/ low voltage (LV) DC-DC inverter 366, a WTOC 370, an AC charger 380, and an inverter 390.

FIG. 3 shows that two components (an e-compressor 350 and an FC HV DC/DC converter 364) of the fuel cell system are connected to the power electronics coolant circuit 300. All of the components in power electronics coolant circuit 300 are connected by cooling lines 440 to high-temperature radiator 202. In some examples, one of the fuel cell components 350 and/or 364 are a part of the power electronics coolant circuit 300 because they are more likely to cause contamination to the fuel cell components of FIG 2. Additionally or alternatively, in some examples, one or more of the fuel cell components 350 and/or 364 are a part of the power electronics coolant circuit 300 because they require cooling via the high-temperature radiator 202, as shown in FIG. 3.

FIG 4 illustrates a battery coolant circuit 400, in accordance with at least one of the examples described herein. The battery coolant circuit 400 shown in fig 4 may be thought of as being part of the second set of components 120 of FIG. 1. The battery coolant circuit 400 comprises a plurality of components connected via cooling lines 440 to condenser 204 of the heat exchanger assembly 130. Battery coolant circuit 400 may comprise one or more components of the fuel cell system. In some examples, AC system 450 and AC chiller 460 may be housed or packaged with one or more components of the fuel cell system, yet be connected with the battery coolant circuit 400.

FIG. 4 also shows variable flow-rate pumps 440 and 442, and a 5-way pump 444. The battery coolant circuit 400 may also comprise a reservoir 430, an HV battery heat exchanger 470, a cabin heater 480, and a positive temperature coefficient (PTC) heater 490.

In some examples, either the power electronics coolant circuit 300 or the battery coolant circuit 400 may not comprise a component from the FC system or may comprise an electrically isolated component from the FC system. In such examples, since the coolant does not come into direct contact with the fuel cells or any components thereof, conductive coolants may be used.

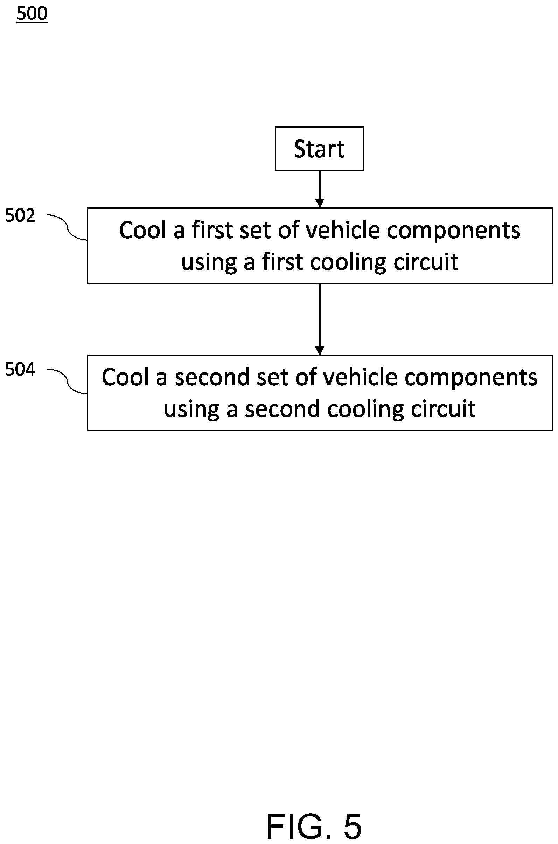

FIG. 5 is a flowchart of a cooling system control method 500, in accordance with at least one of the examples described herein. For example, cooling system control method 500 may be used to control the cooling of at least one of the first set of components and/or the second set of components shown in FIG. 1. Process 500 starts at step 502. At step 502, the system cools a first set of vehicle components using a first cooling circuit.

At step 504, the system cools a second set of vehicle components using a second cooling circuit, wherein the fuel cell system is distributed between the first set of vehicle components and the second set of vehicle components.

In some examples, a control module may be configured to selectively activate at least one cooling circuit 300, 400 and/or 500 to implement the step outlined by method 500.

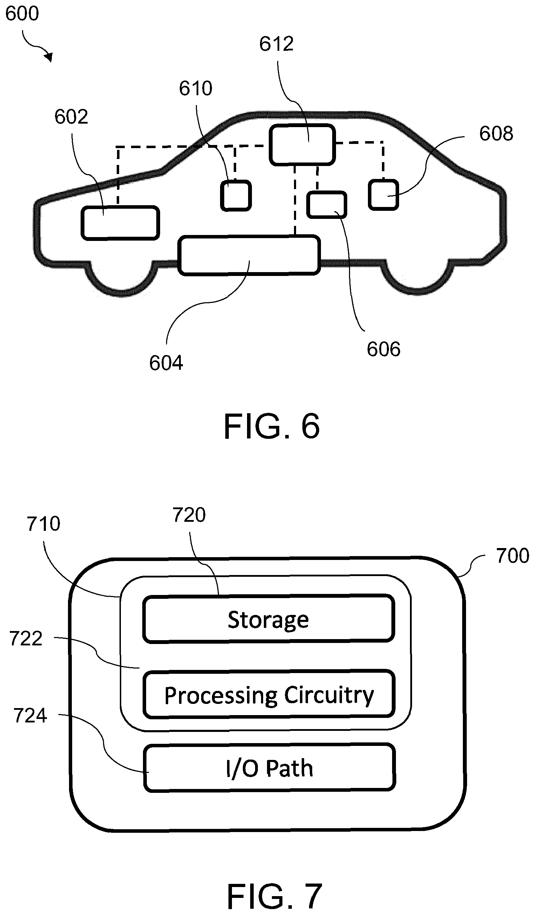

FIG. 6 illustrates a vehicle 600 comprising a fuel cell, a motor 600, and an exemplary cooling system, in accordance with at least one of the examples described herein. According to some examples, there is provided a vehicle 600 comprising a cooling system, in accordance with some examples of the disclosure. In the example shown in FIG. 6, vehicle 600 comprises a motor 602 electrically coupled to a fuel cell 604, e.g., a hydrogen fuel cell. In addition, the vehicle 600 may comprise an HV DC/DC inverter 606, an HV LV (e.g., 12V) DC/DC inverter 608, and an HV battery 610; which are also electrically coupled to the motor and one another through an HV distribution box 612 (e.g., a vehicle power distribution unit, PDU).

In some examples, the HV distribution box 612 (e.g., the vehicle PDU) further comprises a controller, e.g., a power control module (PCM), in operational communication (illustrated by the dashed line connectors) with each of the motor 602, the fuel cell 604, the HV DC/DC inverter 606, an HV LV DC/DC inverter 608, and the HV battery 610. However, the present disclosure is not limited to the set-up shown in FIG. 6. For example, the controller may be any appropriate type of controller, such as a controller communicatively coupled to one or more controllers, which are in turn communicatively coupled to the components shown in FIG. 6. For example, the controller may, at least in part, be integrated with another controller of the vehicle. Furthermore, the controller may be configured to operationally communicate with anyone or more of the vehicle components shown in FIG. 6 or FIG. 7, and/or any other appropriate components of the vehicle. For example, the controller may be a stand-alone controller at least partially configured to operationally communicate with at least one cooling circuit described herein to determine a fan speed for the fan assembly 208, or a pump speed for pumps in the cooling circuits, thus controlling the overall cooling of the vehicle 600. Furthermore, it is understood that controller may be configured to carry out one or more of the above-disclosed methods of cooling a fuel cell system of the vehicle.

The controller manages fuel cell engine functions such as system startup, shutdown, operating state transitions, and warnings and alarms. The controller inputs driver's commands (by way of the accelerator control, for example), communicates with other control devices (such as the bus controller and transmission controller), and receives inputs from other systems. The controller's algorithms derive inverter commands, component setpoints, and valve positions using a set of mathematical relationships. Warnings and alarms are indicated by way of dashboard lights, a message display center, or other means.

FIG. 7 depicts an exemplary control circuitry 700, in accordance with at least one of the examples described herein. In some examples, the controller described above includes control circuitry 700, which comprises storage 720 and processing circuitry 722, and I/O path 724. The controller may be based on any suitable processing circuitry. As referred to herein, processing circuitry should be understood to mean circuitry based on one or more microprocessors, microcontrollers, digital signal processors, programmable logic devices, field-programmable gate arrays (FPGAs), application-specific integrated circuits (ASICs), etc., and may include a multi-core processor (e.g., dual-core, quad-core, hexa-core, or any suitable number of cores). In some examples, e.g., processing circuitry may be distributed across multiple separate processors, multiple of the same type of processors (e.g., two Intel Core i9 processors), or multiple different processors (e.g., an Intel Core i7 processor and an Intel Core i9 processor).

Storage 720, and/or storage of other components of other vehicle controllers, may be electronic storage devices. As referred to herein, the phrase "electronic storage device" or "storage device" should be understood to mean any device for storing electronic data, computer software, or firmware, such as random-access memory, read-only memory, hard drives, and the like, and/or any combination of the same. In some examples, the controller executes instructions for an application stored in memory (e.g., storage 720). Specifically, the controller may be instructed by an application to perform the methods/functions discussed herein. Computer-readable media includes any media capable of storing data. The computer-readable media may be transitory, including, but not limited to, propagating electrical or electromagnetic signals, or may be non-transitory including, but not limited to, volatile and non-volatile computer memory or storage devices such as a hard disk, floppy disk, USB drive, DVD, CD, media cards, register memory, processor caches, Random Access Memory (RAM), etc.

Additionally or alternatively, the controller may be configured to transmit and/or receive data via I/O path 724. For instance, I/O path 724 may include a communication port(s) configured to transmit and/or receive data from at least one of an engine control module, a powertrain control module, and/or a vehicular system control module. Control circuitry 700 may be used to send and receive commands, requests, and other suitable data using I/O path 724. I/O path 724 may connect control circuitry 700 (and specifically processing circuitry 722) to one or more communications paths (described below). I/O functions may be provided by one or more of these communications paths, but are shown as a single path in FIG. 7 to avoid overcomplicating the drawing.

Control circuitry 700 may include communications circuitry (not shown) suitable for communicating with a server or other networks or servers. The instructions for carrying out the above-mentioned methods and systems may be stored on the guidance application server. Communications circuitry may include a cable modem, integrated services digital network (ISDN) modem, a digital subscriber line (DSL) modem, a telephone modem, Ethernet card, or a wireless modem for communications with other equipment, or any other suitable communications circuitry. Such communications may involve the Internet or any other suitable communications networks or paths. In addition, communications circuitry may include circuitry that enables peer-to-peer communication of user equipment devices or communication of user equipment devices in locations remote from each other.

As referred to herein, the phrase "electronic storage device" or "storage device" should be understood to mean any device for storing electronic data, computer software, or firmware, such as random-access memory, read-only memory, hard drives, optical drives, digital video disc (DVD) recorders, compact disc (CD) recorders, BLU-RAY disc (BD) recorders, BLU-RAY 3D disc recorders, digital video recorders (DVR, sometimes called a personal video recorder or PVR), solid-state devices, quantum storage devices, gaming consoles, gaming media, or any other suitable fixed or removable storage devices, and/or any combination of the same. Storage 720 may be used to store various types of content described herein. Nonvolatile memory may also be used (e.g., to launch a boot-up routine and other instructions). Cloud-based storage may be used to supplement storage 720 or instead of storage 720.

A user may send instructions to control circuitry 700 using a user input interface (not shown). The user input interface may be any suitable user interface, such as a remote control, mouse, trackball, keypad, keyboard, touchscreen, touchpad, stylus input, joystick, voice recognition interface, or other user input interfaces.

It should be understood that the examples described above are not mutually exclusive with any of the other examples described with reference to FIGS. 1 - 7. The order of the description of any examples is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

Other variations to the disclosed embodiments can be understood and effected by those skilled in the art in practicing the claimed disclosure, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

This disclosure is made to illustrate the general principles of the systems and processes discussed above and is intended to be illustrative rather than limiting. More generally, the above disclosure is meant to be exemplary and not limiting and the scope of the disclosure is best determined by reference to the appended claims. In other words, only the claims that follow are meant to set bounds as to what the present disclosure includes.

While the present disclosure is described with reference to particular example applications, it shall be appreciated that the disclosure is not limited thereto. It will be apparent to those skilled in the art that various modifications and improvements may be made without departing from the scope and spirit of the present disclosure. Those skilled in the art would appreciate that the actions of the processes discussed herein may be omitted, modified, combined, and/or rearranged, and any additional actions may be performed without departing from the scope of the disclosure.

Any system feature as described herein may also be provided as a method feature and vice versa. As used herein, means plus function features may be expressed alternatively in terms of their corresponding structure. It shall be further appreciated that the systems and/or methods described above may be applied to, or used in accordance with, other systems and/or methods.

Any feature in one aspect may be applied to other aspects, in any appropriate combination. In particular, method aspects may be applied to system aspects, and vice versa. Furthermore, any, some, and/or all features in one aspect can be applied to any, some, and/or all features in any other aspect, in any appropriate combination. It should also be appreciated that particular combinations of the various features described and defined in any aspect can be implemented and/or supplied and/or used independently.

## Claims

1. A cooling system for a vehicle having a fuel cell system, the cooling system comprising:
a first cooling circuit configured to cool a first set of vehicle components; and
a second cooling circuit configured to cool a second set of vehicle components, wherein the fuel cell system is distributed between the first set of vehicle components and the second set of vehicle components.

2. The cooling system of claim 1, the cooling system comprising:
a heat exchanger assembly coupled to the first cooling circuit and the second cooling circuit.

3. The cooling system of claim 2, wherein the first cooling circuit is coupled to a high-temperature heat exchanger of the heat exchanger assembly, and the second cooling circuit is coupled to a low-temperature heat exchanger of the heat exchanger assembly.

4. The cooling system of claim 2 or 3, the cooling system comprising:
a third cooling circuit configured to cool a third set of vehicle components, wherein the third cooling circuit is coupled to the heat exchanger assembly.

5. The cooling system of claim 4, wherein the third cooling circuit is coupled to a condenser of the heat exchanger assembly.

6. The cooling system of any of claims 1-5, the cooling system comprising a control module configured to control coolant flow through the first cooling circuit and the second cooling circuit.

7. The cooling system of any of claims 1-6, wherein the second cooling circuit comprises a first pump configured to flow coolant through a first cooling loop of the second cooling circuit, and second pump configured to flow coolant through a second cooling loop of the second cooling circuit.

8. The cooling system of claim 7, wherein the fuel cell system is cooled using the first cooling circuit and the first cooling loop of the second cooling circuit.

9. A vehicle comprising the cooling system of any of claims 1-8.

10. A cooling system control method for a vehicle having a fuel cell system, the method comprising:
cooling a first set of vehicle components using a first cooling circuit; and
cooling a second set of vehicle components using a second cooling circuit, wherein the fuel cell system is distributed between the first set of vehicle components and the second set of vehicle components.

11. A non-transitory computer-readable medium having instructions encoded thereon for carrying out a method of cooling a fuel cell system of a vehicle, that, when executed by control circuitry, cause the control circuitry to:
control a first cooling circuit to cool a first set of vehicle components; and
control a second cooling circuit configured to cool a second set of vehicle components, wherein the fuel cell system is distributed between the first set of vehicle components and the second set of vehicle components.

12. A cooling system for a vehicle having a fuel cell system, the cooling system comprising:
a first cooling circuit configured to cool at least one component of the fuel cell system; and
a second cooling circuit configured to cool at least one other component of the fuel cell system.
